# EUROPÄISCHE PATENTSCHRIFT

(11) **EP 2 596 340 B1**
(45) Veröffentlichungstag und Bekanntmachung des Hinweises auf die Patenterteilung: **27.10.2021**
(21) Anmeldenummer: 11721441.1
(22) Anmeldetag: 18.05.2011
(51) Int. Cl.: G01N 21/90, B65C 9/06, G01B 11/27, G01B 11/25

(54) **ERFASSUNGSSYSTEM ZUR FLASCHENNAHT- UND EMBOSSINGAUSRICHTUNG UND VERFAHREN ZUR BEHANDLUNG VON FLASCHEN.**
DETECTION DEVICE FOR BOTTLE SEAM AND EMBOSSING ALIGNMENT AND METHOD FOR THE TREATMENT OF BOTTLES.
SYSTÈME DE DÉTECTION POUR L'ORIENTATION DU JOINT DE MOULE ET DES BOSSAGES DE BOUTEILLES ET PROCÉDÉ POUR LE TRAITEMENT DE BOUTEILLES.

(30) Priorität: 23.07.2010 DE 102010032166
(43) Veröffentlichungstag der Anmeldung: 29.05.2013
(73) Patentinhaber: KHS GmbH, 44143 Dortmund (DE)
(72) Erfinder: BUCHWALD, Carsten, 53489 Sinzig (DE); SCHORN, Wolfgang, 59506 Hönningen (DE)
(86) Internationale Anmeldenummer: PCT/EP2011/002491
(87) Internationale Veröffentlichungsnummer: WO 2012/010231

(56) Entgegenhaltungen:
- EP-A1- 2 287 593
- EP-A2- 2 251 268
- DE-A1-102008 053 876
- DE-A1-102008 064 562
- DE-C1- 10 017 126
- GB-A- 2 334 576

## Beschreibung

Die Erfindung betrifft ein Erfassungssystem zum Erfassen von Flaschen und dergleichen Behälter, welcher an einer Behälterwand angeordnete Merkmale aufweisen, wobei das Erfassungssystem zumindest eine Beleuchtungseinheit und zumindest eine optische Anordnung mit zumindest einer Kamera aufweist, wobei die Beleuchtungseinheit eine Vielzahl von auf mehreren Leiterbahnen angeordnete Lichtquellen aufweist, welche in einer Hochrichtung der Beleuchtungseinheit gesehen übereinander angeordnet sind, so dass mittels der in vertikal ausgerichteten Spalten angeordneten Lichtquellen jeweils ein streifenförmiger Lichtstrahl auf einen Behälterwandbereich projizierbar ist, wobei die jeweils auf den Behälterwandbereich projizierten Lichtstrahlen in einer Axialrichtung der Beleuchtungseinheit gesehen zueinander beabstandet sind. Die Erfindung betrifft aber auch ein Verfahren zur Behandlung von Flaschen und dergleichen Behälter mit einem Inspektionsverfahren mittels eines Erfassungssystems.

Die DE 10 2006 008 840 B4 offenbart eine Beleuchtungsvorrichtung zum Erkennen von Fehlern auf der Oberfläche eines zylindrischen Objekts. Eine Schlitzblende ist im Innern einer leuchte angeordnet. Die Schlitzblende ist ein mit axial verlaufenden Schlitzen ausgestatteter Zylinder.

Auch die JP 08015163 A beschäftigt sich mit einer Inspektionsvorrichtung für zylindrische Objekte. Beidseitig eines Förderers ist jeweils eine Mehrzahl von Lichtquellen angeordnet. Zwischen den Lichtquellen sind Kameras angeordnet. Die vielen Lichtquellen erzeugen ein Streifenmuster auf dem Umfang und auf der gesamten Höhe des zylindrischen Objekts, welches von den Kameras aufgenommen wird.

In der JP 10068612 A ist ein Verfahren beschrieben, mit welchem eine Oberfläche eines Objekts untersuchbar ist, ohne dass das Objekt verdreht werden müsste. Dazu wird das Objekt mit Laserlichtstrahlen in einem vorgegebenen Winkel bestrahlt, welche Laserlichtstrahlen von der Oberfläche des Objekts auf einen Bildschirm reflektiert werden.

Die US 3,814,521 offenbart ein Verfahren zum Erkennen eines Objekts, das mit einem Lichtmuster beaufschlagt wird. das Lichtmuster wird erzeugt, indem eine Lichtquelle hinter einem Gitter angeordnet ist, so dass mittels des Gitters angeleuchtete Bereiche und nicht angeleuchtete Bereiche auf dem Objekt entstehen. Eine Kamera "schaut" über einen winklig angestellten Spiegel auf das so mit einem Lichtmuster beaufschlagte Objekt.

Mit der EP 1 446 656 B1 wird ein Verfahren zur Inspektion von Behältern beschrieben, mit welchem beschädigte Behälter erkannt und aussortiert werden können, wobei allerdings akzeptable Unregelmäßigkeiten in die Auswertung einfließen. Die Behälter werden von unten oder von oben beleuchtet.

Mit der DE 10 2008 018 096 A1 soll ein Verfahren bereitgestellt werden, mit welchem Kratzspuren auf Behältern oder Unregelmäßigkeiten im Inneren der Behälterwandung erkennbar sein sollen. Dazu wird die Behälterwandung mit einer regelmäßigen Struktur beaufschlagt, welche ein Streifen- oder Gittermuster sein kann. Bei bestimmten Konstellationen könne auch die Ebenheit bzw. die Oberflächenwelligkeit bestimmt werden. Die Strukturfläche ist eine Ebene, kann aber auch gekrümmt sein, wobei das Muster vorgegeben ist. Die Strukturfläche kann von Hinten durchleuchtete oder im Auflichtverfahren mit Licht bestrahlt werden, so dass durchscheinendes oder reflektiertes Licht auf den Behälter gelangt.

Derartige, eingangs genannte Behälter können in der Art von Flaschen oder dergleichen für Flüssigkeiten, beispielsweise für Getränke verwendet werden. Die Behälter können aus einem transparenten, transluzenten oder opaken Material, beispielsweise aus Glas oder aus einem transluzenten Kunststoff, z.B. PET bestehen, und weisen bevorzugt eine glänzende Oberfläche auf. In den Behältern können Füllmedien unterschiedlichster Art eingefüllt sein, wobei die Behälter unterschiedliche Farben aufweisen können. Die Behälter werden einer Etikettiermaschine zugeführt, in welcher ein Etikett in einer vorbestimmten und wiederholbaren Position stets gleich orientiert zu äußeren Positions- oder Gestaltungsmerkmalen bzw. Embossings auf der Außenseite des Behälters angeordnet wird. Das Etikett soll aber nicht nur korrekt zu Embossings oder anderen Merkmalen ausgerichtet sein, sondern möglichst auch faltenfrei bzw. ohne Erhebungen und/oder Vertiefungen auf dem Behälter angeordnet werden. Behälter können aber zwei vertikal verlaufende, einander direkt gegenüber angeordnete Flaschennähte oder auch nur eine Flaschennaht aufweisen. Insofern ist es durchaus gewünscht, dass das Etikett nicht auf eine der Flaschennähte bzw. auf der Flaschennaht bzw. Behälternaht aufgebracht wird, da dies die Optik des Etiketts bzw. des Behälters dahingehend stört, als das Etikett im Bereich der Flaschennaht eine Falte (Erhebung/Vertiefung) aufweisen kann, so dass der Eindruck entsteht, das Etikett sei mit mangelnder Qualität auf den Behälter aufgebracht. Dies kann bei Endverbrauchern zu einem Meiden des Produkts führen.

Mit dieser Problematik beschäftigt sich zum Beispiel die auf die Anmelderin zurückgehende DE 10 2008 053 876 A1, wobei deren Beleuchtungseinheit eine Vielzahl von Lichtquellen aufweist und so ausgeführt ist, dass von der jeweiligen Lichtquelle ein streifenförmiger Lichtstrahl auf einen Behälterwandbereich projiziert wird, wobei die jeweils streifenförmigen auf den Behälterwandbereich projizierten Lichtstrahlen zueinander beabstandet sind. So können in einfacher Weise Flaschennähte oder Embossings erkannt werden, wobei ein Aufbringen von Etiketten auf Flaschennähten vermeidbar ist, oder aufzubringende Etiketten zu Embossings ausgerichtet aufbringbar sind. Allerdings hat sich gezeigt, dass Behälter unterschiedliche Oberflächeneigenschaften, also von der bevorzugt glänzenden Oberfläche abweichende Oberflächeneigenschaften aufweisen können, welche zu Verfälschungen beispielsweise der Flaschennahterkennung führen können. So können Behälter zum Beispiel eine matte und/oder raue Oberfläche aufweisen, welches das projizierte Linienmuster unscharf abbildet. So können beispielsweise Flaschennähte nicht korrekt erkannt werden, da das projizierte Linienmuster sehr undeutlich ist, was in der matten und/oder rauen Oberfläche begründet ist.

Die GB 2 334 576 A zeigt eine Maschine zur Inspektion von Wänden von Behältern, wie Flaschen, die von einem Förderer zu einer Inspektionsstation transportiert werden. Dabei weist die Maschine eine Lichtquelle, ein Diffusorelement und eine Kamera auf. Die Lichtquelle umfasst mehrere vertikale Reihen von Lichtquellen, wie beispielsweise LEDs, wobei die Reihen ein räumlich zyklisch kontinuierlich variierendes Lichtintensitätsmuster ausführen. Das Muster kann aus einer Ausgangslichtintensität einer Reihe von 100% (weiß) bestehen, wobei die Intensität mehrerer benachbarter Reihen systematisch auf ein niedrigstes Niveau abnimmt, wo Lichtblockierungsfehler von der Kamera gesehen werden können, und dann systematisch zunimmt zur nächsten weißen Reihe.

Aus der DE 100 17 126 C1 ist bereits ein Verfahren zum optischen Überprüfen zumindest teilweise transparenter Behälter in einem Inspektionsbereich mit einer Beleuchtungseinrichtung und eine Abbildungen erzeugende Kamera zur nachfolgenden Auswertung bekannt. Dabei wird für jeden Behälter der Transparenzgrad ermittelt und dann für diesen Behälter ein Lichtfeld konfiguriert, die Lichtintensität des Lichtfeldes oder/und die Abbildungsempfindlichkeit dem ermittelten Transparenzgrad angepasst und das Lichtfeld als Lauflichtfeld synchron mit dem Behälter durch den Inspektionsbereich bewegt. Die Vorrichtung zum Durchführen des Verfahrens weist einen LED-Leuchtschirm mit einer Vielzahl einzeln oder gruppenweise aktivierbarer LEDs sowie dem Inspektionsbereich in Transportrichtung vorgelagert eine Messvorrichtung für den individuellen Transparenzgrad jedes Behälters auf.

Die DE 10 2008 064 562 A1 offenbart weiterhin bereits eine Vorrichtung zum optischen Inspizieren einer zumindest teilweise glänzenden Oberfläche an einem Gegenstand mit einem ersten und zumindest einem zweiten Querträger, die jeweils einen weitgehend kreissegmentförmigen Ausschnitt bilden. Die Querträger sind in einem Längsabstand zueinander angeordnet, der eine Längsrichtung definiert. Die beiden Querträger werden mit einer Anzahl von Längsträgern in dem Längsabstand gehalten, wobei die Längsträger in einem definierten Radialabstand zu den kreissegmentförmigen Ausschnitten angeordnet sind. Die Querträger halten eine lichtdurchlässige Mattscheibe, die einen tunnelförmigen Inspektionsraum bildet. Außerhalb des tunnelförmigen Inspektionsraums sind hinter der Mattscheibe eine Vielzahl von Lichtquellen angeordnet, die einzeln oder in kleinen Gruppen ansteuerbar sind, um variable Hell-Dunkel-Muster auf der Mattscheibe zu erzeugen. Zumindest eine Kamera ist in den tunnelförmigen Inspektionsraum gerichtet.

Der Erfindung liegt daher die Aufgabe zugrunde, ein Erfassungssystem und ein Verfahren zur Behandlung von Flaschen und dergleichen Behälter mit einem Inspektionsverfahren der Eingangs genannten Art anzugeben, welches mit einfachen Mitteln Merkmale auf dem Behälter erkennt, auch wenn Behälter unterschiedlicher Oberflächenqualität untersucht werden sollen, so dass das Etikett nicht auf eine Flaschennaht aufgebracht und/oder korrekt ausgerichtet zu Embossings auf dem Behälter angeordnet werden kann.

Erfindungsgemäß wird der vorrichtungstechnische Teil der Aufgabe durch ein Erfassungssystem mit den Merkmalen des Anspruchs 1 gelöst. Der verfahrenstechnische Teil der Aufgabe wird mit einem Verfahren zur Behandlung von Flaschen und dergleichen Behälter mit einem Inspektionsverfahren mit den Merkmalen des Anspruchs 12 gelöst.

Erfindungsgemäß ist vorgesehen, dass die in vertikal ausgerichteten Spalten angeordneten Lichtquellen einer jeden Leiterbahn in Axialrichtung gesehen versatzlos übereinander auf dieser angeordnet sind, wobei eine jede vertikal ausgerichtete Spalte von Lichtquellen der jeweiligen Leiterbahn über eine Steuereinheit abhängig von detektierten Oberflächeneigenschaften des Behälters so ansteuerbar ist, dass von den vertikal ausgerichteten Spalten ein Lichtmuster auf den Behälterwandbereich projizierbar ist, welches abhängig von den Oberflächeneigenschaften variabel einstellbar ist.

So wird in einfacher Weise erreicht, dass auf die Behälterwand unter Verzicht auf ein statisch, unveränderbar vorgegebenes Lichtmuster ein variabel erzeugbares Lichtmuster auf den Behälterwandbereich projiziert wird, bei welchem benachbarte Spalten von Lichtquellen zu einem Lichtblock zusammengeschaltet werden, welcher zum nächsten Lichtblock durch einen unbeleuchteten Abschnitt beabstandet ist, usw.. So können Abweichungen im Lichtblock, beispielsweise hervorgerufen durch eine Flaschennaht, trotz nachteiliger Oberflächenqualität leicht erkannt werden, da nunmehr lediglich der Lichtblock betrachtet wird, und nicht mehr einzelne Lichtstrahlen. Natürlich ist es möglich, auch ein solches Lichtmuster zu erzeugen, bei welchem jeweils alternierende Spalten von Lichtquellen an- bzw. ausgeschaltete werden, so dass keine Lichtblöcke sondern tatsächlich zueinander beabstandete Lichtstreifen auf den Behälterwandbereich projiziert werden, welche Lichtstreifen aber durch das Nichtanschalten direkt benachbarter Spalten von Lichtquellen einen relativ großen Abstand haben. Die Entscheidung, welches jeweils vorteilhafte Lichtmuster erzeugt wird, wird also direkt durch das Detektieren der Oberflächenqualität getroffen.

Erfindungsgemäß ist die Beleuchtungseinheit so ausgeführt, dass vertikal ausgerichtete Lichtstrahlen auf den Behälterwandbereich projiziert werden.

In einer ersten Ausgestaltung der Beleuchtungseinheit ist vorteilhaft vorgesehen, dass diese ein Trägerelement mit einer zum Behälter orientierten Lichtfläche aufweist. An der Lichtfläche können in bevorzugter Ausführung die Leiterbahnen angeordnet werden, an welcher zueinander beabstandet die Lichtquellen vertikal orientiert angeordnet sind. Jede Leiterbahn ist bevorzugt flexibel, also biegbar ausgeführt und weist vertikal angeordnete Aufnahmestreifen für die Lichtquellen auf, so dass ein streifenförmiges Muster auf den Behälterwandbereich projiziert wird. Die Lichtquellen können beispielhaft als LED-Lichtquellen ausgeführt sein. Natürlich können die Lichtquellen auch als Infrarotlichtquelle ausgeführt sein. Bevorzugter weise sind die Lichtquellen gepulst, wobei die optische Anordnung bzw. die zumindest eine Kamera mit der Lichtquelle synchronisiert wird.

In zweckmäßiger Ausgestaltung ist das Trägerelement bzw. die Lichtfläche in der Art eines Kreisausschnitts ausgeführt, welche den zu inspizierenden bzw. den zu erfassenden Behälter zumindest bereichsweise umfasst, aber axial zu diesem beabstandet ist. An der Lichtfläche ist die Vielzahl von Leiterbahnen mit daran angeordneten Lichtquellen übereinander angeordnet, wobei die einzelnen Lichtquellenreihen bzw. -streifen einer Leiterbahn vorteilhaft ohne seitlichen Versatz zu den darunter angeordneten Lichtquellenreihen bzw. -streifen der jeweils folgenden Leiterbahn angeordnet ist.

In zweckmäßiger Ausgestaltung weist die optische Anordnung mehrere, bevorzugt drei Kameras auf, welche günstiger Weise korrelierend zu dem auf den Behälterwandbereich projizierten Streifenmuster so angeordnet sind, dass der gesamte von den Lichtquellen bestrahlte Behälterwandbereich aufnehmbar ist. In günstiger Ausführung ist zumindest ein Bereich von etwa 40% des Gesamtumfangs des Behälters von der optischen Anordnung aufnehmbar. Natürlich ist die optische Anordnung bezogen auf die Beleuchtungseinheit zweckmäßig höhenversetzt angeordnet.

Denkbar ist aber auch, dass zwei übereinander angeordnete Beleuchtungseinheiten vorgesehen werden, zwischen denen die zumindest eine Kamera angeordnet ist. Beide Beleuchtungseinheiten bzw. deren Spalten von Lichtquellen können identisch oder unterschiedlich angesteuert werden, um gleiche oder unterschiedliche Lichtmuster zu erzeugen.

Das Erfassungssystem ist erfindungsgemäß einer Etikettiermaschine zugeordnet, welche bevorzugt einen Etikettierstern aufweist. Insofern sind das Trägerelement und auch die optische Anordnung bei der Ausführung mit dem Etikettierstern von den baulichen Gegebenheiten des Etikettiersternes abhängig ausführbar. Dies bedeutet, dass nur ein bestimmter Behälterwandbereich von der Beleuchtungseinheit bestrahlt und von der optischen Anordnung aufnehmbar ist. Zweckmäßig ist wenn ein Behälterwandbereich mit dem variabel erzeugbaren Lichtmuster bestrahlt, welcher in einem Übergang von einem Grundkörper zum Halsbereich angeordnet ist. Der betreffende Behälterwandbereich ist also sowohl in Umfangsrichtung als auch in Hochrichtung begrenzt. Von daher ist es zweckmäßig im Sinne der Erfindung, wenn das Trägerelement beispielhaft als gebogener Blechstreifen so ausgeführt ist, dass dieser nicht in die kreisförmige Laufbahn des Behälters bzw. des Etikettiersternes eingreift. Natürlich kann das Trägerelement auch aus anderen geeigneten Materialien ausgeführt sein. An dem Trägerelement kann die Leiterbahn bzw. können die Leiterbahnen in geeigneter Weise ortsstabil befestigt, beispielsweise mit ihrer Rückseite verklebt werden, um nur eine beispielhafte Befestigungsart zu nennen.

In weiter günstiger Ausgestaltung kann vorgesehen sein, der zumindest einen Kamera, bevorzugt allen Kameras eine optische Linse, vorzugsweise in der Ausgestaltung als Zylinderlinse vorzulagern, um das auf den Behälterwandbereich projizierte Streifenmuster bzw. die vertikale Linienstruktur über den gesamten vertikalen Erfassungsbereich optisch zu spreizen. Die optische Linse kann auch als Fresnel-Linse ausgeführt sein, um nur ein weiteres geeignetes Beispiel für eine optische Linse zu nennen.

Mittels der vorteilhaft vorgesehenen optischen Linse kann eine höhere optische Auflösung des Erfassungssystems erreicht werden, da sich die Linienstruktur wesentlich feiner über den gesamten Erfassungsbereich des optischen Erfassungssystems ausbreitet, was zum Beispiel bei glänzenden Flaschenoberflächen sinnvoll ist. Mit der Erfindung kann aber auf eine optische Linse verzichtet werden, da die Lichtstreifen quasi zu Lichtblöcken zusammengefasst werden.

Aufgrund der speziellen Ansteuerung der einzelnen Lichtquellen (Streifen bzw. Spalten) wird so ein gezielt von Oberflächeneigenschaften abhängiges, und daran einstellbares vertikales Streifenmuster auf den Behälterkörper bzw. auf den Behälterwandbereich projiziert. Die vorteilhafte Ansteuerung der Lichtquellen erzeugt ein Abbild der gesamten Beleuchtungseinheit bzw. derer angesteuerter Lichtquellen in Streifen bzw. vertikal angeordneten Linien. Sind an der Behälterwand bzw. an dem zu erfassenden Behälterwandbereich keine Veränderungen, wie zum Beispiel eine Flaschennaht angeordnet, sind die Linien bzw. Lichtblöcke unabhängig von Behälterrotationen oder Behälterpositionen in ihrer Anzahl zueinander immer gleich ausgerichtet. Fällt nun die Flaschennaht in diese Linien- bzw. Blockstruktur, ändert sich deren Anzahl und/oder Anordnung zueinander. Es entsteht zum Beispiel eine Änderung der Linien- bzw. Blockabbildung. Mit der Erfindung kann so unabhängig von Oberflächenqualität, Behälterinhalt und Behälterfarbe eine absolut exakte Position der Behälternaht bestimmt werden. Günstiger Weise können zwei Erfassungssysteme aufeinander folgend vorgesehen werden, so dass durch Rotation des Behälters eine exakte Positionsbestimmung der Behälternaht sichergestellt ist, dies auch deshalb, als das Erfassungssystem, insbesondere mit seinem Trägerelement wie zuvor beschrieben bei einem Etikettierstern nicht in diesen Eingreifen soll. Mit dem folgenden, zweiten Erfassungssystem kann durch ein Verdrehen des Behälters ein weiterer Behälterwandbereich inspiziert werden. Hierbei liegt der Erfindung die Tatsache zugrunde, dass der Behälter auf einem verdrehbaren Drehteller aufsteht, und bei dem Zuführen zu dem Erfassungssystem verdreht werden kann.

Um zu vermeiden, dass durch die Umgebung einfallende Reflexionen des Behälters eine Erkennungsgenauigkeit negativ beeinflusst, können die Lichtquellen als Infrarotlichtquelle ausgeführt sein, wobei auch ein Tageslichtsperrfilter vorgesehen werden kann.

Nach dem Erfassen bzw. der Positionsbestimmung der Behälternaht im Auflichtverfahren erfolgt erfindungsgemäß eine Ausrichtung des Behälters, sodass ein Etikett an Stellen angebracht wird, an denen sich keine Behälternaht befindet, wodurch zum Beispiel Etikettenerhebungen (Falten) vermieden werden.

Um die Behälternaht zu erfassen, bzw. in ihrer Position genau lokalisieren zu können, auch wenn ein Behälter mit matter oder rauer Oberfläche, also eigentlich nachteiligen Oberflächeneigenschaften inspiziert werden sollen, ist erfindungsgemäß vorgesehen, dass zunächst die Oberflächeneigenschaften des Behälters detektiert werden. Mit den detektierten Oberflächeneigenschaften, welche in die Steuereinheit eingespeist werden, werden dann die vertikal ausgerichteten Spalten von Lichtquellen gezielt so angesteuert, dass von den Lichtquellen bzw. den Spalten ein Lichtmuster auf den Behälterwandbereich projiziert wird, welches abhängig von den Oberflächeneigenschaften variabel eingestellt ist.

So können durch ein einfaches Ansteuern der Spalten unterschiedliche Lichtmuster erzeugt werden, deren einzelne Linien oder Blöcke einen im Vergleich zu einem Lichtmuster mit allen angesteuerten Spalten, größeren Abstand in Axialrichtung gesehen zueinander aufweisen, so dass auch Behälter mit matter und/oder rauer Oberfläche hinreichend aussagesicher untersucht werden können. Zwar sind die einzelnen Linien untereinander verschwommen, jedoch wird eine Blockbildung der einzelnen Lichtstreifen erzeugt, bei welchen Abweichungen im einzelnen Block erkennbar sind. Ein Block kann zum Beispiel aus zwei, drei oder vier benachbarten Lichtstreifen gebildet sein, welche von der Steuereinheit angesteuert bzw. angeschaltet werden. Die dann folgenden zwei, drei oder vier Lichtstreifen (Spalten von Lichtquellen) werden so angesteuert, dass diese ausgeschaltet sind, also nicht leuchten. So wird mit den jeweils folgenden Lichtstreifen alternierend vorgegangen, um das Lichtmuster zu erzeugen. Ersichtlich ist so der jeweils große Abstand der einzelnen Blöke zueinander aufgrund der an- bzw. ausgeschalteten "Lichtblöcke". Natürlich können auch mehr als vier aufeinander folgende Lichtstreifen entsprechend angesteuert werden. Denkbar ist auch, anstelle der jeweils gleichen Anzahl an- und ausgeschalteter aufeinander folgender Lichtstreifen unterschiedliche Anzahlen zu wählen. So können z.B. vier aufeinander folgende Lichtstreifen angeschaltet sein, also pulsierend aufleuchten, wobei lediglich die folgenden zwei Lichtstreifen ausgeschaltet sind, um einen unbeleuchteten Bereich zu bilden, auf denen bzw. auf den wieder vier aufeinander folgende angeschaltete Lichtstreifen usw. folgen. Insofern sollen alle denkbaren und an die jeweils detektierte Oberflächeneigenschaft geeigneten Lichtmuster von der Erfindung umfasst sein.

Zweckmäßig ist auch, wenn jeweils Linienblöcke erzeugt werden, bei denen alle direkt übereinander angeordneten und in ausgewählter Anzahl benachbarter Lichtstreifen pulsierend aufleuchten, wobei die benachbarten Lichtstreifen ausgeschaltet bleiben. So wird ein Lichtmuster mit aus einer Mehrzahl aufscheinender "Linienblöcke" erzeugt, welche durch die nicht angeleuchteten Bereiche zueinander beabstandet sind.

Möglich ist aber auch ein Lichtmuster mit versetzten bzw. axial versetzten "Lichtblöcken" zu erzeugen. Dabei können beispielsweise zwei direkt übereinander angeordnete Leiterbahnen bzw. deren Lichtstreifen identisch angesteuert werden, wobei die folgenden Leiterbahnen bzw. deren Lichtstreifen mit einem axialen Versatz dazu entsprechend angesteuert werden, so dass ein von den beiden oberen Leiterbahnen unterhalb des nicht aufscheinenden Bereichs unterhalb diesem der pulsierende Lichtblock projiziert wird, so dass ein in Axialrichtung gesehen versetztes Streifenmuster projiziert wird. Anstelle von vier Leiterbahnen können auch weniger (beispielsweise zwei) oder mehr (beispielsweise fünf) Leiterbahnen übereinander angeordnet werden. Zielführend ist, dass die einzelnen Lichtstreifen abhängig von der Oberflächeneigenschaft zusammen ein sicher auswertbares Lichtmuster erzeugen, um auch bei matter oder rauer Oberfläche eine Behälternaht zielgenau lokalisieren zu können. Möglich ist auch nicht nur die Spalten von Lichtquellen anzusteuern sondern jede einzelne Lichtquelle. So kann sich ergeben, dass eine einzige Leiterbahn vorgesehen wird oder mehrere Leiterbahnen vorgesehen werden, wobei durch variables Ansteuern der Lichtquellen ein variabel erzeugbares Lichtmuster auf den Behälterwandbereich projizierbar ist.

Das erfindungsgemäße Erfassungssystem bzw. das Inspektionsverfahren kann im Sinne der Erfindung aber nicht nur zur Lagebestimmung der Behälternaht eingesetzt werden. Da die Beleuchtungseinheit aus einer Vielzahl von einzeln gezielt ansteuerbaren Lichtstreifen gebildet ist, kann diese günstiger Weise auch zur Erkennung von äußeren Gestaltungsmerkmalen, so genannten Embossings eingesetzt werden. Auf eine optische Linse vor den jeweiligen Kameras kann dabei verzichtet werden, wobei die Beleuchtungseinheit als Dunkelfeld-Beleuchtung einsetzbar ist. Wie zuvor wird dabei ein streifenförmiges Lichtmuster auf den Behälter projiziert. Das Embossing erzeugt ebenfalls wie die Flaschennaht eine Veränderung auf der Behälteroberfläche. Über die Projektion wird die Struktur und die Form des Embossings wieder gespiegelt. Diese Strukturen können je nach Drehposition des Behälters für das (optische) Erfassungssystem eingelernt werden. Erfindungsgemäß ist das Erfassungssystem so in der Lage, unabhängig von Inhalt und Behälterfarbe eine absolut exakte Position des Embossings zu bestimmen. Bei einer glatten Oberfläche, also eine Oberfläche ohne Embossing, entstehen keine Glanzpunkte des auf den Behälter projizierten Streifenmusters. Die Oberfläche erscheint für das (optische) Erfassungssystem schwarz. Fällt das auf den Behälter projizierte Streifenmuster dagegen auf das Embossing, bzw. auf die Erhebungen, entstehen diese Glanzpunkte, welche von der optischen Anordnung bzw. von den Kameras als (weiße) Lichtpunkte aufgenommen werden. Zwischen den Glanzpunkten erscheint die glatte Behälteroberfläche schwarz, so dass das gesamte Embossing mittels der Glanzpunkte von der Kameraanordnung erkennbar ist. Mittels der Erkennung des Embossings ist eine Ausrichtung zum Korrekten, also ausgerichteten Aufbringen des Etikettes in Relation zu dem Embossing möglich.

Weitere vorteilhafte Ausgestaltungen der Erfindung sind in den Unteransprüchen und der folgenden Figurenbeschreibung offenbart. Es zeigen
Fig.1 einen prinzipiellen Aufbau eines Erfassungssystems,
Fig. 2 eine Mehrzahl übereinander angeordneter Leiterbahnen als Einzelheit,
Fig. 3 ein Ansteuerungsbeispiel zum Erzeugen eines zwei-zwei-Blockmusters mit Versatz,
Fig. 4 ein Ansteuerungsbeispiel zum Erzeugen eines vier-vier-Blocklinienmusters ohne Versatz
Fig. 5 ein Ansteuerungsbeispiel zum Erzeugen eines vier-vier-Blocklinienmusters mit Versatz,
Fig. 6 ein Ansteuerungsbeispiel zum Erzeugen eines eins-eins-Linienmusters mit Versatz,
Fig. 7 ein Streifenmuster als Projektion auf eine Flasche mit nachteiliger Oberflächeneigenschaft,
Fig. 8 ein Streifenmuster als Projektion gemäß dem Ansteuerungsbeispiel aus Figur 3,
Fig. 9 ein Streifenmuster als Projektion gemäß dem Ansteuerungsbeispiel aus Figur 3 mit Störung,
Fig. 10 ein Streifenmuster als Projektion gemäß dem Ansteuerungsbeispiel aus Figur 4,
Fig. 11 ein Streifenmuster als Projektion gemäß dem Ansteuerungsbeispiel aus Figur 4 mit Störung,
Fig. 12 ein Streifenmuster als Projektion gemäß dem Ansteuerungsbeispiel aus Figur 5,
Fig. 13 ein Streifenmuster als Projektion gemäß dem Ansteuerungsbeispiel aus Figur 6, und
Fig. 14 eine Projektion des Streifenmusters zum Erkennen eines Embossings.

In den unterschiedlichen Figuren sind gleiche Teile stets mit denselben Bezugszeichen versehen, weswegen diese in der Regel auch nur einmal beschrieben werden.

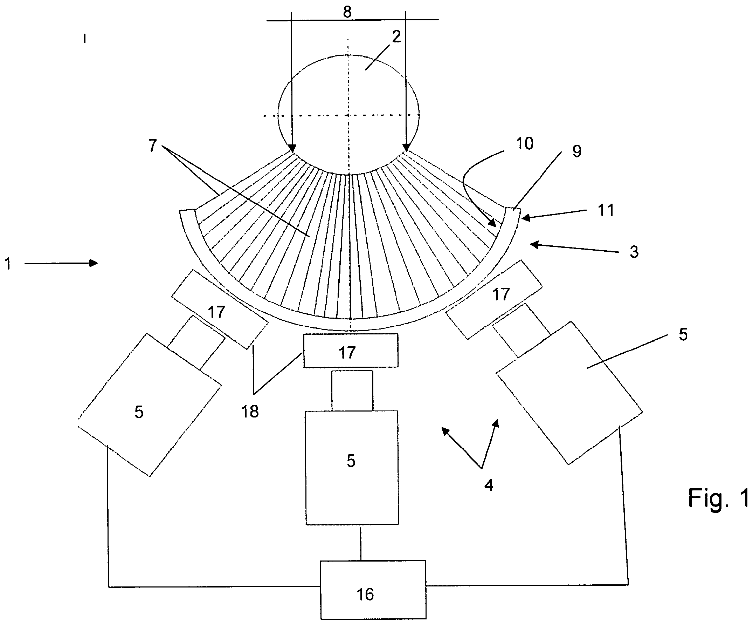

Figur 1 zeigt ein Erfassungssystem 1 zum Erfassen von Flaschen 2 oder dergleichen Behältern. Die beispielhaften Flaschen 2 können an ihrer Behälterwand angeordnete Merkmale wie zum Beispiel Flaschennähte und/oder Gestaltungsmerkmale, so genannte Embossings aufweisen. Das Erfassungssystem 1 weist zumindest eine Beleuchtungseinheit 3 und zumindest eine optische Anordnung 4 mit zumindest einer Kamera 5 auf.

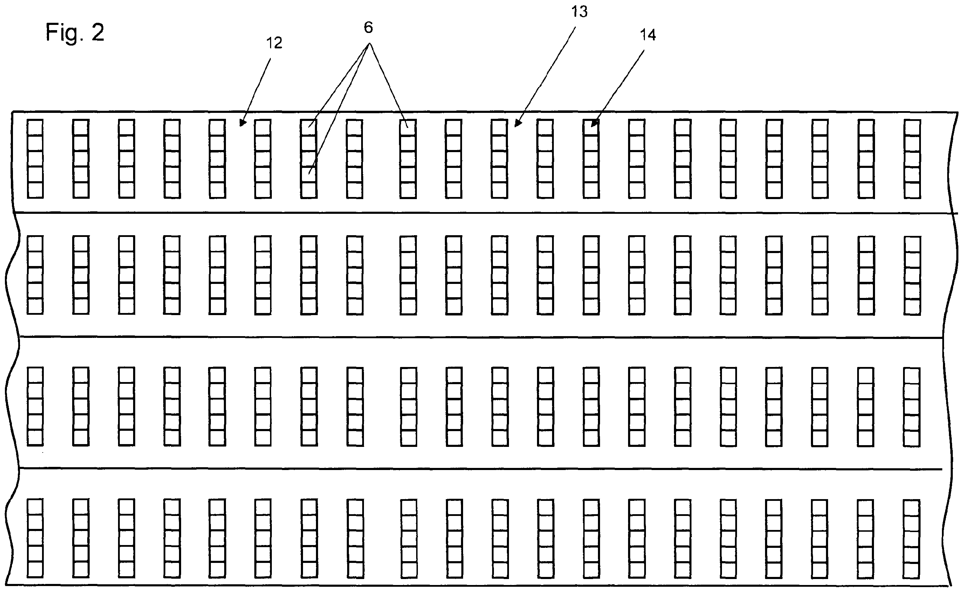

Die Beleuchtungseinheit 3 weist eine Vielzahl von in Spalten 14 angeordneten Lichtquellen 6 (Figur 2) auf, und ist so ausgeführt, dass ein streifenförmiger Lichtstrahl 7 auf einen Behälterwandbereich 8 projiziert wird, wobei die jeweils streifenförmigen, auf den Behälterwandbereich 8 projizierten Lichtstrahlen 7 zueinander beabstandet sind. Dabei sind stehen die mit einer durchgestrichenen Linie gezeichneten Beleuchtungseinheiten 3 für eingeschaltete, also leuchtende Beleuchtungseinheiten 3, und die gestrichelt dargestellten Beleuchtungseinheiten stellen ausgeschaltete, als nicht leuchtende Beleuchtungseinheiten 3, hier Dioden dar.

Die Behälter bzw. Flaschen 2 können aus einem transparenten, transluzenten oder opaken Material bestehen, und weisen eine bevorzugt glänzende Oberfläche auf. Die Flasche 2 kann jeweils unterschiedliche Farben aufweisen und mit jeweils unterschiedlichen Füllmedien gefüllt sein. Die Behälter bzw. Flaschen 2 können aber auch von einer der glänzenden Oberflächeneigenschaft abweichende Oberflächeneigenschaft, beispielsweise eine matte oder raue Oberfläche aufweisen.

Bei dem in Figur 1 dargestellten Ausführungsbeispiel weist die Beleuchtungseinheit 3 ein Trägerelement 9 mit einer zum Behälter 2 orientierten Lichtfläche 10 und einer dazu gegenüberliegenden Rückseite 11 auf. Das Trägerelement 9 ist beispielhaft als kreisausschnittartiger Blechstreifen ausgeführt. Natürlich können auch andere geeignete Materialien zur Ausgestaltung des Trägerelementes 9 eingesetzt werden.

An der Lichtfläche 10 sind in dem gezeigten Beispiel mehrere Leiterbahnen 12, beispielhaft vier Leiterbahnen 12 übereinander (Figur 2) angeordnet. Natürlich ist denkbar, die Lichtfläche 10 aus einer einzigen großen Leiterbahn oder horizontal geteilten Leiterbahnen zu bilden. Jede Leiterbahn 12 ist als flexible Leiterbahn 12 ausgeführt und weist vertikal angeordnete Aufnahmestreifen 13 auf, die in einer Längsrichtung der Leiterbahn 12 gesehen zueinander beabstandet sind. An den Aufnahmestreifen 13 können die Lichtquellen 6 angeordnet werden. So sind Lichtstreifen (Spalten 14 von Lichtquellen 6) gebildet. Mit ihrer Rückseite ist die Leiterbahn 12 mit der Lichtfläche des Trägerelementes 9 verbindbar.

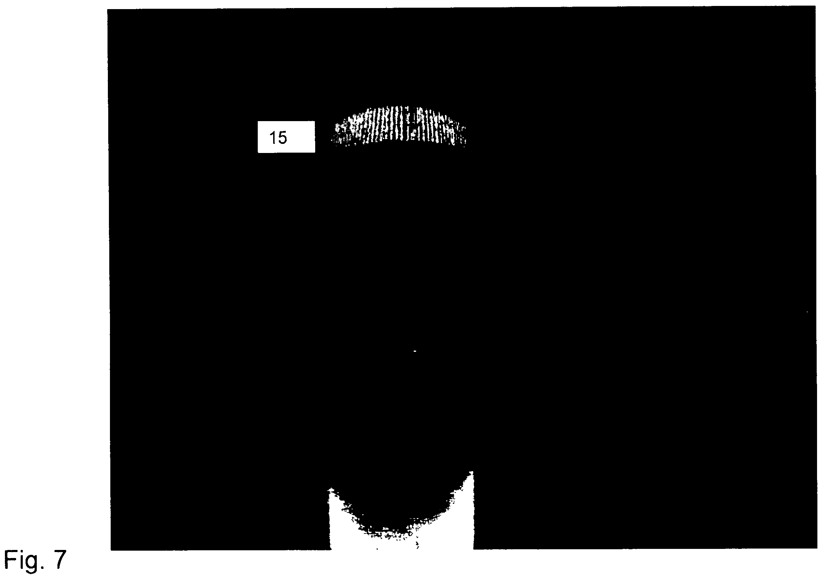

Mit der Leiterbahn 12, bzw. mit den darauf in vertikalen Spalten 14 bzw. Linien angeordneten Lichtquellen 6 wird ein streifenförmiges Lichtmuster 15 auf den Behälterwandbereich 8 (Figuren 7 bis 13) projiziert.

Zielführend ist, dass die einzelnen Spalten 14 bzw. Linien mit den entsprechend angeordneten Lichtquellen 6 unabhängig von einander angesteuert werden können, also wahlweise an- oder ausgeschaltet werden können, so dass ein variabel einstellbares Lichtmuster 15 auf die Behälterwandbereich 8 projiziert werden kann. Das jeweils zweckmäßige Lichtmuster 15 ist an die Oberflächeneigenschaften des Behälters bzw. der Flasche 2 angepasst variabel erzeugbar.

Ein beispielhaft streifenförmiges Lichtmuster 15, welches auf einen bevorzugt zylindrisch ausgeführten Behälterwandbereich 8 projiziert wird, ist in Figur 7 gezeigt. Die Lichtstrahlen 7, bzw. das streifenförmige Lichtmuster 15 ist hell dargestellt ist, wobei die nicht angestrahlte Behälterwand schwarz bzw. dunkel erscheint.

Wie zu erkennen ist, sind die einander benachbarten Lichtstrahlen 7 sehr verschwommen, also unscharf bzw. gehen sogar teilweise ineinander über, wodurch zum Beispiel eine Inspektionsaufgabe hinsichtlich einer zu erfassenden Flaschennaht mit Fehlern behaftet sein kann. Ein solches Bild ergibt sich zum Beispiel bei einem Behälterwandbereich 8, mit einer relativ rauen Oberfläche. Bei einem Behälterwandbereich 8 mit einer glatten Oberfläche würden scharfe, also klar voneinander getrennte Lichtstrahlen projiziert werden können.

An dem Trägerelement 9 sind, wie bereits erwähnt, mehrere, lediglich beispielhaft vier Leiterbahnen 12 angeordnet, wie beispielhaft in Figur 2 gezeigt. Hierbei sind die Leiterbahnen 12 mit ihren vertikal angeordneten Spalten 14 linear übereinander angeordnet, so dass sich jeweils quasi ein von oben nach unten erstreckender, quasi ungetrennt durchgehend erscheinender Lichtstreifen ergibt, welcher zum benachbarten Lichtstreifen axial beabstandet ist.

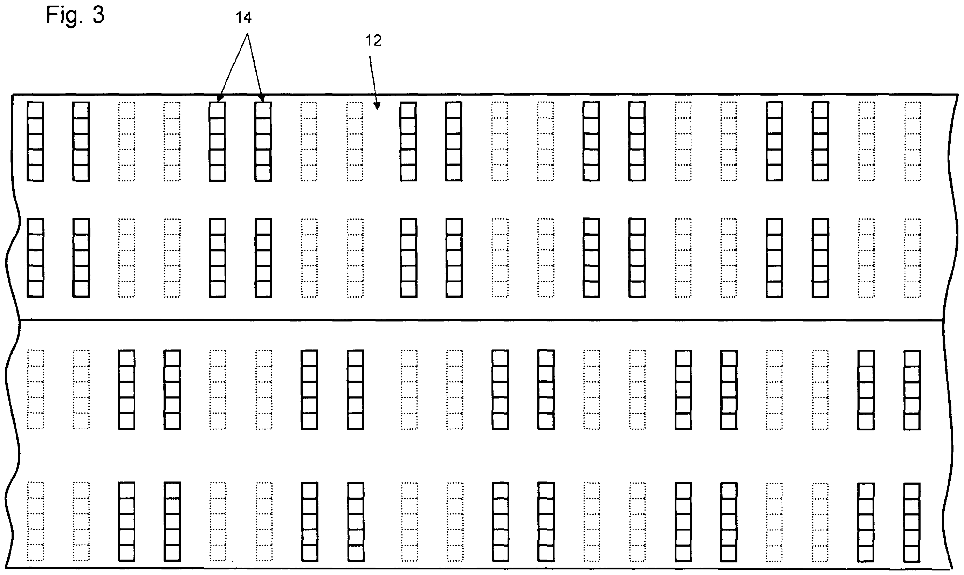

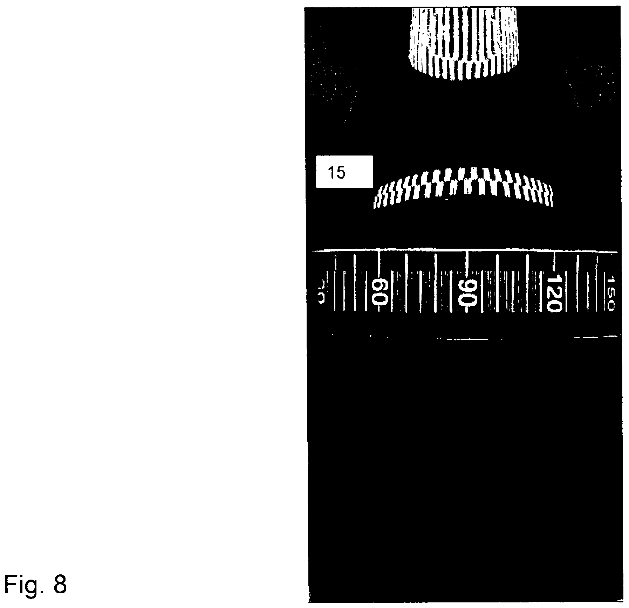

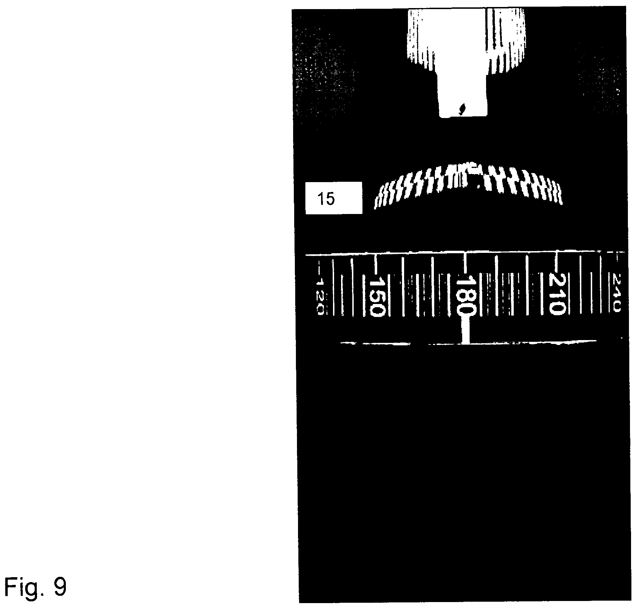

Bei den in Figur 7 dargestellten, projizierten Lichtstrahlen 7 sind alle Spalten 14 angeschaltet. Wird aber im Vorfeld detektiert, dass die Flasche 2 bzw. der Behälterwandbereich 8 eine Oberflächeneigenschaft aufweist, welche zu einer verschwommenen Projektion der Lichtstrahlen 7 führen kann, werden die einzelnen Spalten 14 so angesteuert, dass beispielhaft zwei direkt neben- und übereinander angeordnete Spalten 14 gleichzeitig angesteuert werden, wobei die direkt benachbarten und darunter angeordneten Spalten 14 ausgeschaltet sind. Eine solche variable Schaltungsanordnung der Leiterbahnen 12 ist in Figur 3 dargestellt. Figur 8 zeigt die projizierten Lichtstrahlen bzw. das projizierte Lichtmuster 15 auf den Behälterwandbereich 8 gemäß der Schaltung nach Figur 3. Ersichtlich ist, dass so quasi ein zwei-zwei-Lichtblockmuster in versetzter Anordnung auf den Behälterwandbereich 8 projiziert werden kann. Das in Figur 8 projizierte Lichtmuster ist ungestört, was bedeutet, dass in dem betreffenden Behälterwandbereich 8 keine Flaschennaht vorhanden ist. Eine solche Flaschennaht ist in Figur 9 als Störung des Lichtmusters erkennbar, wobei die Flaschennaht mit einem nur zu Demonstrationszwecken angebrachten Erkennungsstreifen hervorgehoben ist.

Hierbei ist darauf hinzuweisen, dass das Lichtmuster entsprechend der Ansteuerung der Spalten 14 gemäß Figur 3 sehr scharfe Konturen hat, welche so auch auf einem Behälter mit relativ rauer Oberfläche projizierbar ist. Zwar gehen die direkt benachbarten Lichtstreifen auch etwas ineinander über bzw. verschwimmen, jedoch ist vorteilhaft der erzeugte Lichtblock auf Störungen aussagesicher inspizierbar, da dieser aufgrund des nicht erleuchteten Bereiches zum nächsten Lichtblock genügend Abstand hat. So werden mit der Erfindung Störungen also nicht Linienweise, sondern Blockweise inspiziert.

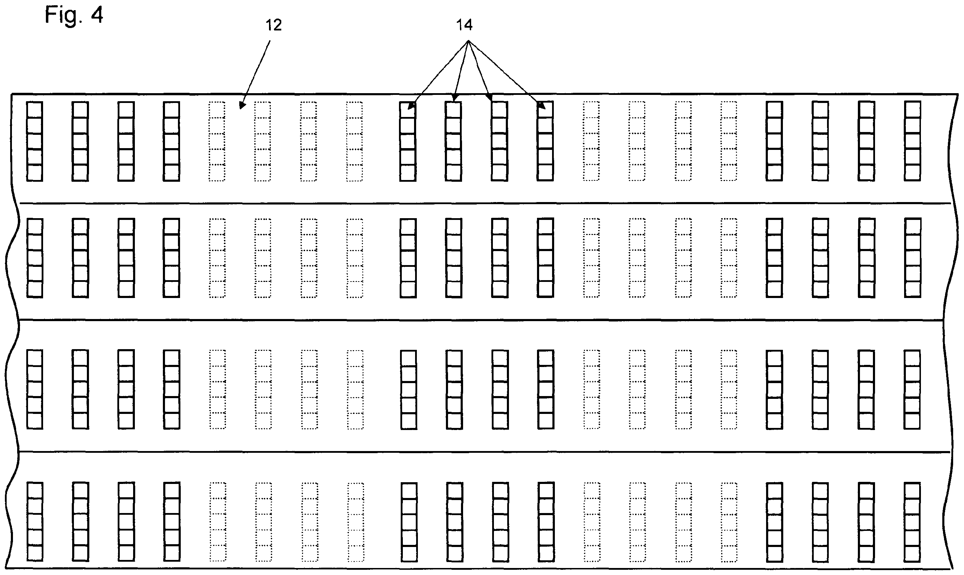

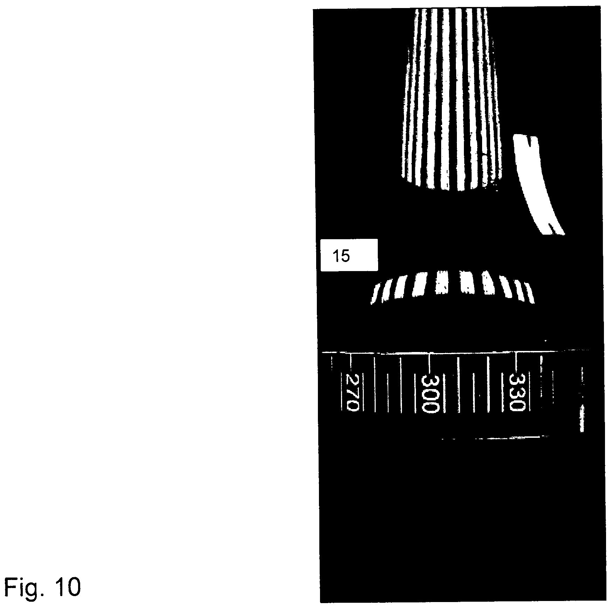

Eine weitere mögliche Ansteuerungsvariante der Spalten 14 zeigt Figur 4, bei welcher beispielhaft vier direkt neben- und übereinander angeordnete Spalten 14 gleichzeitig angesteuert werden, wobei die jeweils direkt benachbarten vier Spalten 14 ausgeschaltet sind. Figur 10 zeigt das dazu korrespondierend projizierte Lichtmuster. Ersichtlich ist, dass so quasi ein vier-vier-Lichtlinienmuster in nicht versetzter Anordnung auf den Behälterwandbereich 8 projiziert werden kann.

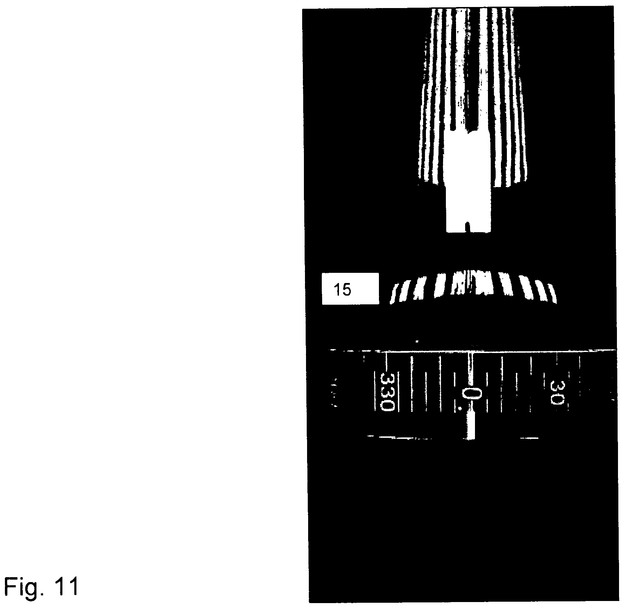

In Figur 10 ist das Lichtmuster ungestört. Figur 11 zeigt wiederum eine Störung des Lichtmusters durch die Flaschennaht. Hinzuweisen ist auch hier, dass der Erkennungsstreifen nur zu Demonstrationszwecken aufgebracht ist.

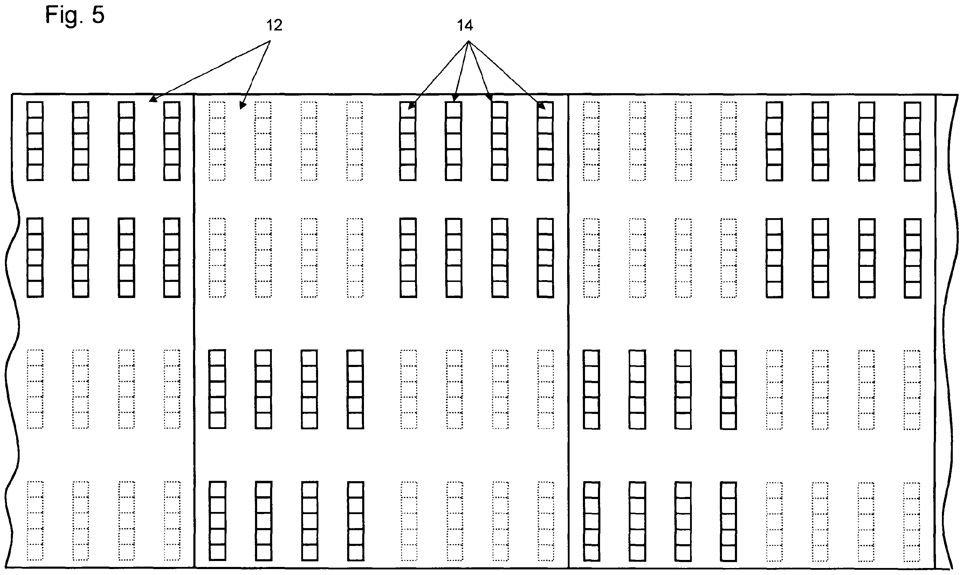

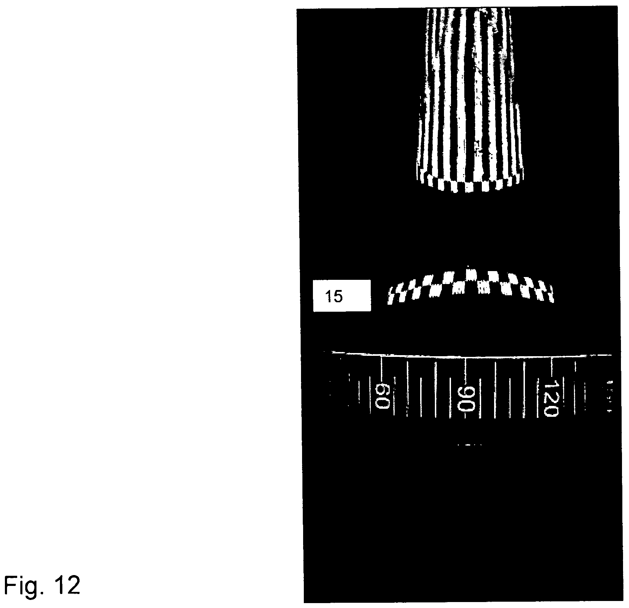

Figur 5 wiederum zeigt ein ebenfalls an Oberflächeneigenschaften des Behälters variabel eingestelltes Lichtmuster, bei welchem beispielhaft vier direkt neben- und übereinander angeordnete Spalten 14 gleichzeitig angesteuert werden, wobei die direkt benachbarten und darunter angeordneten vier Spalten 14 ausgeschaltet sind. Ersichtlich ist, dass so quasi ein vier-vier-Lichtblockmuster in versetzter Anordnung auf den Behälterwandbereich 8 projiziert werden kann. Die unteren Blöcke sind zu den oberen Blöcken axial versetzt. Das dazu korrespondierend projizierte Lichtmuster ist in Figur 12 dargestellt. Ersichtlich ist hier der Vorteil, dass ein Lichtblock axial versetzt zu den anderen erzeugt ist, so dass im Unterschied zu einem Lichtblockmuster ohne Versatz Lichtblöcke auf den gesamten Umfang des Behälterwandbereiches 8 projiziert sind.

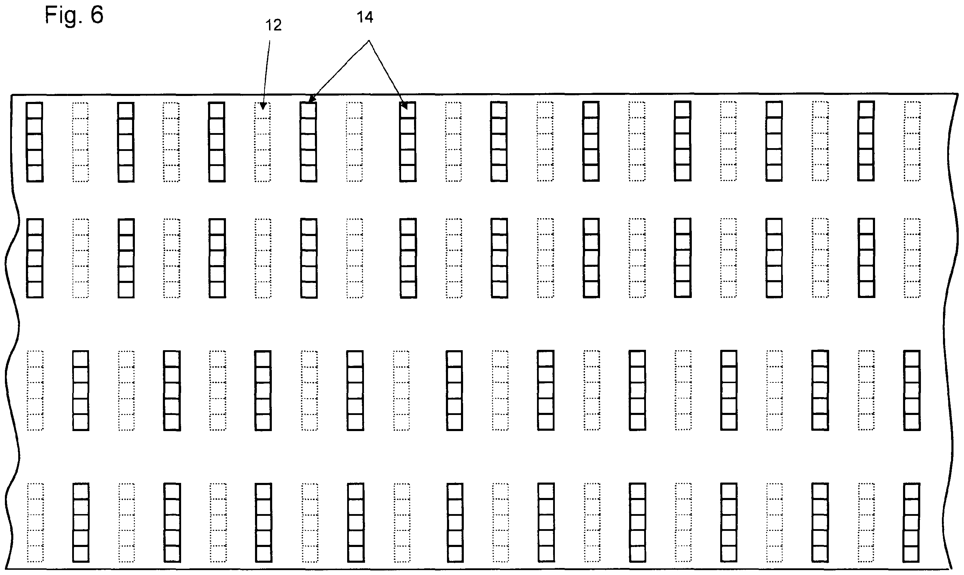

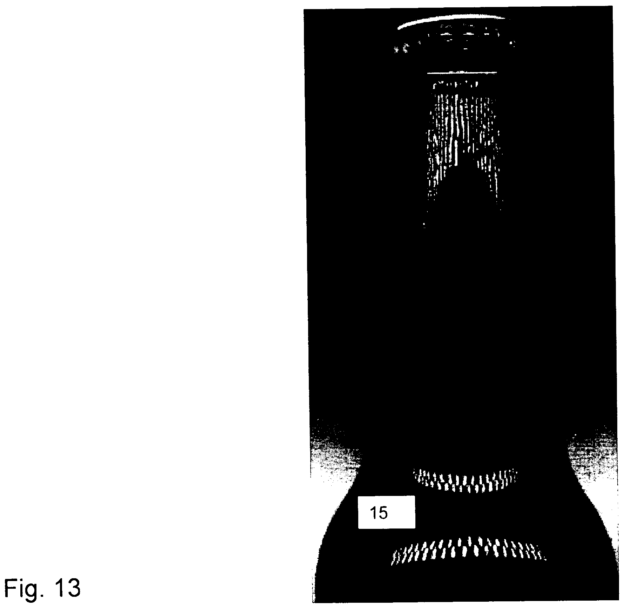

Figur 6 wiederum zeigt ein ebenfalls an Oberflächeneigenschaften des Behälters bzw. der Flasche 2 variabel eingestelltes Lichtmuster 15, bei welchem beispielhaft jeweils eine direkt neben- und übereinander angeordnete Spalte 14 gleichzeitig angesteuert wird, wobei die direkt benachbarte und darunter angeordnete eine Spalte 14 ausgeschaltet ist. Insofern wird unter "Lichtblock" im Sinne der Erfindung auch verstanden, dass sich angeschaltete Lichtstreifen mit nicht angeschalteten Lichtstreifen direkt abwechseln, wobei untere Linien zu oberen Linien axial versetzt oder ohne Versatz auf den Behälterwandbereich 8 projiziert werden können. Das zu Figur 6 korrespondierend projizierte Lichtmuster ist in Figur 13 dargestellt.

Zweckmäßig ist, wenn immer zwei der Leiterbahnen 12, bevorzugt die direkt übereinander angeordneten Leiterbahnen 12 mit derselben Schaltungsanordnung geschaltet werden, also dass die Spalten 14 in ihrer axialen Abfolge identisch angesteuert werden. Denkbar ist natürlich, mehr oder weniger als vier Leiterbahnen 12 vorzusehen. Zielführend ist, dass, wenn eine nachteilige Oberflächenqualität detektiert wird, die einzelnen Lichtstreifen so angesteuert werden, dass quasi ein "Block"lichtmuster erzeugt ist, deren einzelnen Blöcke auf Abweichungen inspizierbar sind.

Ersichtlich ist der Vorteil der Erfindung, welche ein variabel erzeugbares Lichtmuster bereitstellen kann, welches abhängig von Oberflächeneigenschaften der Behälter bzw. Flaschen 2 erzeugbar ist, in dem Spalten 14 der Leiterbahnen 12 angesteuert werden, also angeschaltet werden oder nicht, also ausgeschaltet werden.

Die entsprechende Ansteuerung der einzelnen Spalten 14 erfolgt erfindungsgemäß mittels einer Steuereinheit 16, welche auch als Auswerte- und Steuereinheit 16 ausgeführt sein kann. Das jeweils erforderliche Lichtmuster 15, je nach Abhängigkeit der Oberflächeneigenschaften des Behälters, ist dazu zweckmäßiger in der Auswerte- und Steuereinheit 16 abgelegt bzw. gespeichert, und leicht abrufbar bzw. schaltbar. Selbstverständlich kann das erforderliche Lichtmuster 15 auch manuell in die Auswerte- und Steuereinheit 16 eingegeben und bevorzugt abgespeichert werden. Möglich ist, dass mittels geeigneter Vorrichtungen die Oberflächeneigenschaften der Behälter automatisch oder manuell in die Auswerte- und Steuereinheit 16 eingespeist werden, welche dann vollautomatisch oder mittels manuellem Abruf des zugehörigen, erforderlichen Lichtmusters 15 ein solches durch Ansteuerung der Lichtquellen 6 bzw. der Spalten 14 erzeugt.

Der Behälter 2 nach dem Ausführungsbeispiel gemäß Figur 1 kann in einem Etikettierstern einer Etikettiermaschine an den Erfassungssystem 1 vorbeitransportiert. Von daher ist das Trägerelement 9 vorteilhaft so ausgeführt, dass dieses nicht in den Transportweg (Kreisbahn) des Behälters 2 eingreift. Mit der Beleuchtungseinheit 3 kann so ein variables streifenförmiges Lichtmuster 15 auf einen Behälterwandbereich 8 projiziert werden, der etwa 40% des Gesamtumfangs des Behälters 2 entspricht.

Natürlich ist das Erfassungssystem 1 gemäß der Erfindung an jeglicher Behälterbehandlungsvorrichtung, nicht nur an Etikettiermaschinen einsetzbar.

Die optische Anordnung 4 (Figur 1) weist wie beispielhaft dargestellt drei Kameras 5 auf. Die Kameras 5 sind bezogen auf die Beleuchtungseinheit 3 höhenversetzt angeordnet. Dies bedeutet, dass die optische Anordnung 4 oberhalb oder unterhalb der Beleuchtungseinheit 3 angeordnet sein kann. Die optische Anordnung 4 ist so angeordnet, dass der mit dem streifenförmigen Lichtmuster 15 ausgeleuchtete Behälterwandbereich 8 aufnehmbar ist. Die optische Anordnung 4, also jede Kamera 5 ist mit der Auswerte- und Steuereinheit 16 verbunden, in welcher die von der jeweiligen Kamera 5 gelieferten Bilder oder Bilddaten ausgewertet werden. Möglich ist auch eine Auswertung mittels eines computerprogrammierbaren Programms, welches in der Auswerte- und Steuereinheit 16 durchgeführt werden kann. Die Verarbeitung der von der Kamera 5 gelieferten Bilder oder Bilddaten erfolgt beispielsweise durch Vergleich mit in der Auswerte- und Steuereinheit 16 abgespeicherten Solldaten. Insofern kann die Auswerte- und Steuereinheit 16 auch als Bildverarbeitungs- und Steuereinheit 16 bezeichnet werden. Die Auswerte- und Steuereinheit 16 ist beispielsweise ein Rechner oder eine rechnergestützte Einheit mit entsprechenden Eingängen für analoge oder digitale von der jeweiligen Kamera gelieferten Daten. Weiter weist die Auswerte- und Steuereinheit 16 nicht dargestellte Ausgänge auf, welche mit den einzelnen Komponenten (z.B. Behälterausrichtung, Etikettieraggregat) der beispielhaften Etikettiermaschine verbunden sind.

Bei dem in Figur 1 dargestellten Ausführungsbeispiel ist in Aufsicht gesehen nur eine Beleuchtungseinheit 3 erkennbar. Möglich ist, eine jeweils identische oder unterschiedliche Beleuchtungseinheit 3 unterhalb oder oberhalb der erkennbaren Beleuchtungseinheit 3 anzuordnen, wobei die Kamera 5 dann zwischen beiden Beleuchtungseinheiten 3 angeordnet wäre. Auch die jeweils unterhalb oder oberhalb angeordnete Beleuchtungseinheit 3 kann Spalten 14 von Lichtquellen 6 aufweisen, also Lichtstreifen aufweisen, welche entsprechend ansteuerbar sind. Die übereinander angeordneten Beleuchtungseinheiten 3 können zusammen und/oder gleichzeitig justierbar, beispielsweise höhenverstellbar sein.

Jeder Kamera 5 ist lediglich beispielhaft eine optische Linse 17 zugeordnet. In dem dargestellten Ausführungsbeispiel nach Figur 1 ist die jeweilige optische Linse 17 als Zylinderlinse ausgeführt, welche mit ihren Stirnflächen 18 senkrecht zur Optik der jeweiligen Kamera 5 angeordnet ist. Die optische Linse 17 kann auch als Fresnel-Linse ausgeführt sein, um nur ein weiteres Beispiel zu nennen.

Aufgrund der speziellen Ansteuerung der einzelnen Lichtquellen 6 (Streifen bzw. Spalten 14) wird so ein gezieltes vertikales, variabel einstellbares Streifenmuster 15 auf den Behälterkörper bzw. auf den betreffenden Behälterwandbereich 8 projiziert. Sind an der Behälterwand bzw. an dem zu erfassenden Behälterwandbereich 8 keine Veränderungen, wie zum Beispiel eine Flaschennaht angeordnet, sind die Spalten 14 bzw. die Linien bzw. Blöcke des vertikalen Streifenmusters 15 (Figuren 8,10,12,13) unabhängig von Behälterrotationen oder Behälterpositionen in ihrer Anzahl zueinander immer gleich ausgerichtet. Würde nun die Flaschennaht in diese Linienstruktur bzw. Blockstruktur (streifenförmiges Lichtmuster 15) einfallen, ändert sich Anzahl und Anordnung der projizierten Lichtstreifen des betreffenden Lichtblockes zueinander (Figuren 9,11). Es entsteht zum Beispiel eine Änderung der Linien- bzw. Blockabbildung. Mit der Erfindung kann so unabhängig von Oberflächenqualität, Behälterinhalt und Behälterfarbe eine absolut exakte Position der Behälternaht bzw. der Flaschennaht bestimmt werden.

Günstiger Weise können zwei Erfassungssysteme 1 aufeinander folgend vorgesehen werden, so dass durch Rotation des Behälters eine exakte Positionsbestimmung der Behälternaht sichergestellt ist, dies auch deshalb, als das Erfassungssystem 1, insbesondere mit seinem Trägerelement 9 wie zuvor beschrieben bei einem Etikettierstern nicht in diesen Eingreifen soll. Mit dem folgenden, zweiten Erfassungssystem kann durch ein Verdrehen des Behälters 2 ein weiterer Behälterwandbereich 8 inspiziert werden. Hierbei liegt der Erfindung die Tatsache zugrunde, dass der Behälter auf einem verdrehbaren Drehteller aufsteht, und bei dem Zuführen zu dem Erfassungssystem 1 verdreht werden kann. Denkbar ist auch, neben einem Erfassungssystem zur Grobausrichtung noch ein Erfassungssystem zur Feinausrichtung vorzusehen.

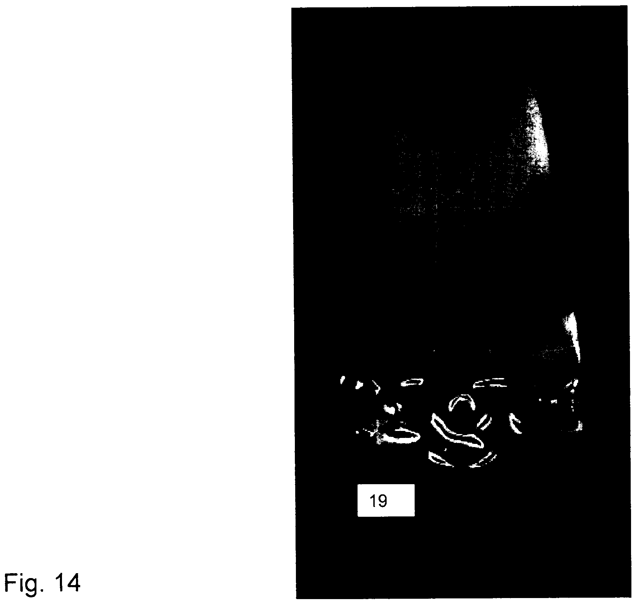

Wie Figur 14 entnehmbar ist, kann das Erfassungssystem 1 auch zum Erkenn von äußeren Gestaltungsmerkmalen, so genannten Embossings 19 eingesetzt werden, da die Beleuchtungseinheit 3 eine Vielzahl von einzeln gezielt ansteuerbaren Lichtquellen 6 bzw. Spalten 14 aufweist. Auf eine optische Linse vor den jeweiligen Kameras 5 kann dabei verzichtet werden, wobei die Beleuchtungseinheit 3 als Dunkelfeld-Beleuchtung einsetzbar ist. Wie zuvor wird dabei ein streifenförmiges Lichtmuster 15 auf den Behälter projiziert. Das Embossing 19 erzeugt ebenfalls wie die Flaschennaht eine Veränderung auf der Behälteroberfläche. Diese Strukturen können je nach Drehposition des Behälters 2 für das (optische) Erfassungssystem 1 eingelernt werden. Das Erfassungssystem 1 ist so in der Lage, unabhängig von Inhalt, Oberflächeneigenschaft und Behälterfarbe eine absolut exakte Position des Embossings 19 zu bestimmen. Bei einer glatten Oberfläche, also eine Oberfläche ohne Embossing, entstehen keine Glanzpunkte des auf den Behälter projizierten Streifenmusters 15. Die Oberfläche erscheint für das (optische) Erfassungssystem 1 schwarz bzw. dunkel (invers weiß bzw. hell). Fällt das auf den Behälter 2 projizierte Streifenmuster 15 dagegen auf das Embossing, bzw. auf die Erhebungen, entstehen diese Glanzpunkte, welche von der optischen Anordnung bzw. von den Kameras als (weiße bzw. helle) Lichtpunkte (invers schwarze bzw. dunkle Lichtpunkte) aufgenommen werden. Zwischen den Glanzpunkten erscheint die glatte Behälteroberfläche schwarz bzw. dunkel (invers weiß bzw. hell), so dass das gesamte Embossing 19 mittels der Glanzpunkte von der optischen Anordnung 4 erkennbar ist. Mittels der Erkennung des Embossings 19 ist eine Ausrichtung zum Korrekten, also ausgerichteten Aufbringen des Etikettes in Relation zu dem Embossing 19 möglich. Zielführend dabei ist, dass dabei alle Spalten 14 der Beleuchtungseinheit 3 angesteuert, also angeschaltet werden, um so die Glanzpunkte zu erhalten. Bevorzugt wird dabei auf die vorteilhafte Ausgestaltung zurückgegriffen, bei welcher zwei Beleuchtungseinheiten 3 übereinander angeordnet sind, wobei zur Embossingerkennung beispielhaft stets die untere Beleuchtungseinheit verwendet werden könnte, wobei die obere Beleuchtungseinheit 3 reagierend auf die Oberflächeneigenschaft der Flasche 2 das gezielt ansteuerbare, bzw. variabel einstellbare Lichtmuster 15 auf den Behälterwandbereich 8 projiziert.

### Bezugszeichenliste

- 1: Erfassungssystem
- 2: Behälter/Flasche
- 3: Beleuchtungseinheit
- 4: Optische Anordnung
- 5: Kamera
- 6: Lichtquelle
- 7: Lichtstrahlen
- 8: Behälterwandbereich
- 9: Trägerelement
- 10: Lichtfläche
- 11: Rückseite von 9
- 12: Leiterbahn
- 13: Aufnahmestreifen
- 14: Vertikale Spalten bzw. Linien
- 15: Vertikales Lichtmuster
- 16: Auswerte- und Steuereinheit
- 17: Optische Linse
- 18: Stirnflächen von 17
- 19: Embossing

## Patentansprüche

1. Erfassungssystem zum Erfassen von Flaschen (2) und dergleichen Behälter (2) im Auflichtverfahren, wobei die Flaschen (2) oder dergleichen Behälter (2) an einer Behälterwand angeordnete Behälternähte und/oder Embossings (19) aufweisen, wobei das Erfassungssystem (1) eine Steuereinheit (16), zumindest eine Beleuchtungseinheit (3) und zumindest eine optische Anordnung (4) mit zumindest einer Kamera (5) aufweist, wobei die Beleuchtungseinheit (3) eine Vielzahl von auf mehreren Leiterbahnen (12) angeordnete Lichtquellen (6) aufweist, welche in einer Hochrichtung der Beleuchtungseinheit gesehen übereinander angeordnet sind, so dass mittels der in vertikal ausgerichteten Spalten angeordneten Lichtquellen (6) jeweils ein streifenförmiger Lichtstrahl (7) als Auflicht auf einen Behälterwandbereich (8) projizierbar ist, wobei die jeweils auf den Behälterwandbereich (8) projizierten Lichtstrahlen in einer Axialrichtung der Beleuchtungseinheit (3) gesehen zueinander beabstandet sind, wobei die in vertikal ausgerichteten Spalten angeordneten Lichtquellen einer jeden Leiterbahn (12) in Axialrichtung gesehen versatzlos übereinander auf dieser angeordnet sind, wobei eine jede vertikal ausgerichtete Spalte (14) von Lichtquellen (6) der jeweiligen Leiterbahn (12) über die Steuereinheit (16) so unabhängig von den anderen Spalten (14) ansteuerbar ist, dass von den vertikal ausgerichteten Spalten (14) ein Lichtmuster auf den Behälterwandbereich (8) eines einzelnen Behälters (2) projizierbar ist, welches abhängig von den Oberflächeneigenschaften variabel eingestellt wird und bei welchem benachbarte Spalten (14) von Lichtquellen (6) zu Lichtblöcken zusammengeschaltet werden, wobei die Lichtblöcke des Lichtmusters einen im Vergleich zu einem Lichtmuster mit allen angesteuerten Spalten (14) größeren axialen Abstand zueinander aufweisen, wobei die vertikal ausgerichteten Spalten (14) von Lichtquellen (6) einer jeden Leiterbahn (12) so angesteuert werden, dass ein mit in Axialrichtung gesehenes, einen Versatz aufweisendes Streifenmuster (15) aus den Lichtblöcken auf den Behälterwandbereich (8) projiziert wird, indem einzelne oder eine Gruppe von benachbarten Lichtquellen (6) einer vertikal ausgerichteten Spalte (14) zeitgleich mit einzelnen oder einer Gruppe von horizontal benachbarten Lichtquellen (6) mindestens einer benachbarten Spalte (14) ein oder ausgeschaltet werden können, wobei die Steuereinheit (16) weiterhin derart gebildet ist, dass mittels des Streifenmusters (15) sowie der wenigstens einen Kamera (5) zunächst unabhängig von Inhalt und Behälterfarbe eine absolut exakte Position der Behälternaht und/oder des Embossings (19) bestimmt wird und nachfolgend ein Ausrichten der Flasche (2) oder des Behälters (2) ermöglicht wird, sodass ein Etikett an Stellen aufgebracht werden kann, an denen sich keine Behälternaht und kein Embossing (19) befindet, sowie dass ein Etikettieren der ausgerichteten Flaschen (2) und dergleichen Behälter (2) in einer Etikettiermaschine ermöglicht wird, sodass das Etikett in einer vorbestimmten und wiederholbaren Position stets gleich orientiert zu Behälternähten und/oder Embossings (19) angeordnet ist.

2. Erfassungssystem nach Anspruch 1, **dadurch gekennzeichnet, dass** in vertikale Richtung mindestens eine oder eine Gruppe von Lichtquellen (6) einer Spalte einschaltbar und mindestens eine oder eine Gruppe von Lichtquellen (6) ausschaltbar ist.

3. Erfassungssystem nach Anspruch 1 oder 2, **dadurch gekennzeichnet, dass** mindestens einzelne oder Gruppen von benachbarten Lichtquellen (6) einer vertikal ausgerichteten Spalte (14) zeitgleich mit einzelnen oder einer Gruppe von horizontal benachbarten Lichtquellen (6) mindestens einer benachbarten Spalte (14) mit mindestens in einer in vertikal benachbarten einzelnen oder Gruppe von benachbarten Lichtquellen derart ein- oder ausschaltbar sind, dass ein schachbrettartiges Muster an hellen und dunklen Bereichen auf der Beleuchtungseinheit (3) und nachfolgend auf einem Behälter erzeugbar ist.

4. Erfassungssystem nach einem der vorhergehenden Ansprüche, **dadurch gekennzeichnet, dass** die Beleuchtungseinheit (3) ein Trägerelement (9) mit einer zum Behälter (2) orientierten Lichtfläche (10) aufweist.

5. Erfassungssystem nach einem der vorhergehenden Ansprüche, **dadurch gekennzeichnet, dass** die Beleuchtungseinheit (3) so ausgeführt ist, dass ein vertikal ausgerichtetes Streifenmuster (15) auf den Behälterwandbereich (8) projizierbar ist.

6. Erfassungssystem nach einem der vorhergehenden Ansprüche, **dadurch gekennzeichnet, dass** die Beleuchtungseinheit (3) an ihrer Lichtfläche (10) die mehreren Leiterbahnen (12) aufweist.

7. Erfassungssystem nach einem der vorhergehenden Ansprüche, **dadurch gekennzeichnet, dass** die Beleuchtungseinheit (3) zumindest an ihrer Lichtfläche (10) kreisausschnittsartig ausgeführt ist.

8. Erfassungssystem nach einem der vorhergehenden Ansprüche, **dadurch gekennzeichnet, dass** die optische Anordnung (4) mehrere Kameras (5) aufweist.

9. Erfassungssystem nach einem der vorhergehenden Ansprüche, **dadurch gekennzeichnet, dass** der zumindest einen Kamera (5) eine optische Linse (17) zugeordnet ist.

10. Erfassungssystem nach einem der vorhergehenden Ansprüche, **dadurch gekennzeichnet, dass** die zumindest eine Kamera (5) der optischen Anordnung (4) zwischen zwei vertikal übereinander angeordneten Beleuchtungseinheiten (3) angeordnet ist.

11. Erfassungssystem nach einem der vorhergehenden Ansprüche, **dadurch gekennzeichnet, dass** die Beleuchtungseinheit (3) zusammen und/oder gleichzeitig mit der zumindest einen Kamera (5) der optischen Anordnung (4) höhenverstellbar ist.

12. Verfahren zur Behandlung von Flaschen (2) und dergleichen Behälter (2) mit einem Inspektionsverfahren mittels eines Erfassungssystems zum Erfassen von Flaschen (2) und dergleichen Behälter (2) im Auflichtverfahren für ein positionsgenaues Etikettieren der Flaschen (2) und dergleichen Behälter (2), wobei die Flaschen (2) oder dergleichen Behälter (2) an einer Behälterwand angeordnete Behälternähte und/oder Embossings (19) aufweisen, wobei das Erfassungssystem (1) eine Steuereinheit (16), zumindest eine Beleuchtungseinheit (3) und zumindest eine optische Anordnung (4) mit zumindest einer Kamera (5) aufweist, wobei die Beleuchtungseinheit (3) eine Vielzahl von auf mehreren Leiterbahnen (12) angeordnete Lichtquellen (6) aufweist, welche in einer Hochrichtung der Beleuchtungseinheit gesehen übereinander angeordnet sind, so dass mittels der in vertikal ausgerichteten Spalten angeordneten Lichtquellen (6) jeweils ein streifenförmiger Lichtstrahl (7) als Auflicht auf einen Behälterwandbereich (8) projizierbar ist, wobei die jeweils auf den Behälterwandbereich (8) projizierten Lichtstrahlen in einer Axialrichtung der Beleuchtungseinheit (3) gesehen zueinander beabstandet sind, wobei eine jede vertikal ausgerichtete Spalte (14) von Lichtquellen (6) der jeweiligen Leiterbahn (12) über eine Steuereinheit so unabhängig von den anderen Spalten (14) ansteuerbar ist, dass von den vertikal ausgerichteten Spalten (14) ein Lichtmuster auf den Behälterwandbereich (8) eines einzelnen Behälters (2) projizierbar ist, wobei das Inspektionsverfahren zumindest die Schritte umfasst:
- Detektieren von Oberflächeneigenschaften der Behälter (2), und
- variable Erzeugung eines Lichtmusters auf den Behälterwandbereich durch Ansteuern einer jeden vertikal ausgerichteten Spalte (14) von Lichtquellen (6) unabhängig von den anderen Spalten (14) über die Steuereinheit (16) abhängig von den detektierten Oberflächeneigenschaften derart, dass von den Spalten (14) ein Lichtmuster auf den Behälterwandbereich (8) eines einzelnen Behälters (2) projiziert wird, welches abhängig von den Oberflächeneigenschaften variabel eingestellt ist und bei welchem benachbarte Spalten (14) von Lichtquellen (6) zu Lichtblöcken zusammengeschaltet werden, wobei die Lichtblöcke des Lichtmusters einen im Vergleich zu einem Lichtmuster mit allen angesteuerten Spalten (14) größeren axialen Abstand zueinander aufweisen, wobei die vertikal ausgerichteten Spalten (14) von Lichtquellen (6) einer jeden Leiterbahn (12) so angesteuert werden, dass ein mit in Axialrichtung gesehenes, einen Versatz aufweisendes Streifenmuster (15) aus den Lichtblöcken auf den Behälterwandbereich (8) projiziert wird, wobei das Inspektionsverfahren zum Erkennen der Position von Behälternähten und/oder Embossings (19) auf der Oberfläche der Flaschen (2) und dergleichen Behälter (2) durchgeführt wird, sowie
- Bestimmen einer absolut exakten Position der Behälternaht und/oder des Embossings (19) unabhängig von Inhalt und Behälterfarbe mittels des Streifenmusters (15) sowie mittels der wenigstens einen Kamera (5), und
zudem das Verfahren zur Behandlung von Flaschen (2) und dergleichen Behälter (2) nachfolgend wenigstens die Schritte umfasst:
- Ausrichten der Flasche (2) oder des Behälters (2), sodass ein Etikett an Stellen aufgebracht werden kann, an denen sich keine Behälternaht und kein Embossing (19) befindet, um eine Etikettenerhebung zu vermeiden, sowie
- Etikettieren der ausgerichteten Flaschen (2) und dergleichen Behälter (2) in einer Etikettiermaschine, sodass das Etikett in einer vorbestimmten und wiederholbaren Position stets gleich orientiert zu Behälternähten und/oder Embossings (19) angeordnet ist.

## Claims

1. Detection system for detecting bottles (2) and similar containers (2) with the direct light method, wherein the bottles (2) or similar containers (2) exhibit container seams and/or embossings (19) arranged on a container wall, wherein the detection system (1) comprises a control unit (16), at least one illuminating unit (3), and at least one optical assembly (4) with at least one camera (5), wherein the illuminating unit (3) comprises a plurality of light sources (6) arranged on several conductor paths (12), which are arranged above one another seen in a vertical direction of the illuminating unit, such that, by means of the light sources (6) arranged in vertically aligned columns, in each case a stripe-shaped light beam (7) can be projected as direct light onto a container wall region (8), wherein the light beams projected onto a container wall region (8) in each case are spaced at a distance from one another, seen in an axial direction of the illuminating unit (3), wherein the light sources of each conductor path (12) arranged in a vertical direction, seen in the axial direction are arranged one above the other without offset on this conductor path, wherein each vertical arranged column (14) of light sources (6) of the respective conductor path (12) can be controlled by the control unit (16) independently of the other columns (14) in such a way that a light pattern can be projected from the vertically arranged columns (14) onto the container wall region (8) of an individual container (2), which is variably adjusted as a function of the surface properties, and with which adjacent columns (14) of light sources (6) are connected together to form light blocks, wherein the light blocks of the light pattern exhibit a greater axial distance from one another in comparison with a light pattern with all the actuated columns (14), wherein the vertically directed columns (14) of light sources (6) of each conductor path (12) are actuated in such a way that a stripe pattern (15) exhibiting an offset, seen in the axial direction, is projected from the light blocks onto the container wall region (8), in that individual light sources (6) or a group of adjacent light sources of a vertically directed column (14) can be switched on or off simultaneously with individual light sources (6), or with a group of light sources, horizontally adjacent to one another, of at least one adjacent column (14), wherein the control unit (16) is further configured such that, by means of the stripe pattern (15) and the at least one camera (5), first, independently of the contents and container colour, an absolutely exact position of the container seam and/or the embossing (19) is determined, and, following this, an alignment of the bottle (2) or of the container (2) is made possible, such that a label can be applied at locations at which there is no container seam and no embossing (19) present, and that the labelling of the aligned bottles (2) and similar containers (2) in a labelling machine is made possible, such that the label is arranged in a predetermined and repeatable position which is always oriented in the same way in respect of the container seams and/or embossings (19).

2. Detection system according to claim 1, **characterised in that**, in the vertical direction, at least one light source or a group of light sources of a column can be switched on, and at least one light source (6) of a column can be switched on, and at least one light source (6) or a group of light sources can be switched off.

3. Detection system according to claim 1 or 2, **characterised in that** at least individual light sources or groups of light adjacent light sources (6) of a vertically arranged column (14) can be switched on and off simultaneously with individual light sources or a group of horizontally adjacent light sources (6) of at least one adjacent column (14), with at least individual light sources or a group of light sources vertically adjacent, in such a way that a chessboard pattern of light and dark regions can be produced on the lighting unit (3), and subsequently on a container.

4. Detection system according to any one of the preceding claims, **characterised in that** the lighting unit (3) comprises a carrier element (9) with a lighting surface (10) oriented towards the container (2).

5. Detection system according to any one of the preceding claims, **characterised in that** the lighting unit (3) is configured in such a way that a vertically arranged stripe pattern (15) can be projected onto the container wall region (8).

6. Detection system according to any one of the preceding claims, **characterised in that** the lighting unit (3) comprise the plurality of conductor paths (12) on their light surface (10).

7. Detection system according to any one of the preceding claims, **characterised in that** the illuminating unit (3) is configured in the form of a circular cut-out at least on its light surface (10).

8. Detection system according to any one of the preceding claims, **characterised in that** the optical assembly (4) comprises several cameras (5).

9. Detection system according to any one of the preceding claims, **characterised in that** an optical lens (17) is assigned to the at least one camera (5).

10. Detection system according to any one of the preceding claims, **characterised in that** the at least one camera (5) of the optical assembly (4) is arranged between two illuminating units (3) arranged vertically above one another.

11. Detection system according to any one of the preceding claims, **characterised in that** the illuminating unit (3) is height-adjustable together and/or simultaneously with the at least one camera (5) of the optical assembly (4).

12. Method for treating bottles (2) and similar containers (2) with an inspection method by means of a detection system for the detecting of bottles (2) and similar containers (2) in the direct light method for a precisely positioned labelling of the bottles (2) and similar containers (2), wherein the bottles (2) or similar containers (2) comprise container seams and/or embossings (19) arranged on a container wall, wherein the detection system (1) comprises a control unit (16), at least one illuminating unit (3), and at least one optical assembly (4) with at least one camera (5), wherein the illuminating unit (3) comprises a plurality of light sources (6) arranged on several conductor paths (12), which, seen in a vertical direction of the illuminating unit, are arranged above one another, such that, by means of the light sources (6) arranged in the vertical direction, in each case a stripe-shaped light beam (7) can be projected as a direct light onto a container wall region (8), wherein the light beams projected in each case onto the container wall region (8) are spaced at a distance from one another seen in an axial direction of the illuminating unit (3), wherein each vertically arranged column (14) of light sources (6) of the respective conductor path (12) can be actuated by means of a control unit independently of the other columns (14), in such a way that, by the vertically directed columns (14), a light pattern can be projected onto the container wall region (8) of an individual container (2), wherein the inspection method comprises at least the steps:
- detecting surface properties of the containers (2), and
- variable production of a light pattern onto the container wall region by the actuation and control of each vertically directed column (14) of light sources (6), independently of the other columns (14), by means of the control unit (16), depending on the detected surface properties, in such a way that a light pattern is projected by the columns (14) onto the container wall region (8) of an individual container (2), which is variably adjusted depending on the surface properties, and wherein adjacent columns (14) of light sources (6) are connected together to form light blocks, wherein the light blocks of the light pattern exhibit a greater axial distance from one another in comparison with a light pattern with all the controlled columns (14), wherein the vertically arranged columns (14) of light sources (6) of each conductor path (12) are actuated and controlled in such a way that a stripe pattern (15) exhibiting an offset, seen in the axial direction, is projected out of the light blocks onto the container wall region (8), wherein the inspection method for detecting the position of container seams and/or embossings (19) is carried out on the surface of the bottles (2) and similar containers (2), and
determination of an absolutely exact position of the container seam and/or of the embossing (19), independently of the content and container colour, by means of the stripe pattern (15) and by means of the at least one camera (5), and, in addition, the method for treating bottles (2) and similar containers (2) comprises at least the following steps:
- aignment of the bottle (2) or the container (2) such that a label can be applied at places at which no container seam and no embossing (19) is present, in order to avoid label detachment, and
- labelling of the aligned bottles (2) and similar containers (2) in a labelling machine, such that the label is arranged in a predetermined and repeatable position, always oriented in the same way in relation to container seams and/or embossings (19).

## Revendications

1. Système de détection pour la détection de bouteilles (2) et récipients similaires (2) dans le procédé en lumière incidente, dans lequel les bouteilles (2) ou récipients similaires (2) présentent des joints de récipient et/ou bossages (19) agencés au niveau d'une paroi de récipient, dans lequel le système de détection (1) présente une unité de commande (16), au moins une unité d'éclairage (3) et au moins un agencement optique (4) avec au moins une caméra (5), dans lequel l'unité d'éclairage (3) présente une pluralité de sources de lumière (6) agencées sur plusieurs pistes conductrices (12) qui sont agencées les unes au-dessus des autres vu dans un sens vertical de l'unité d'éclairage de sorte qu'au moyen des sources de lumière (6) agencées dans des colonnes orientées verticalement respectivement un faisceau de lumière (7) en forme de bande puisse être projeté comme lumière incidente sur une zone de paroi de récipient (8), dans lequel les faisceaux de lumière projetés respectivement sur la zone de paroi de récipient (8) sont espacés les uns des autres vu dans un sens axial de l'unité d'éclairage (3), dans lequel les sources de lumières agencées dans des colonnes orientées verticalement de chaque piste conductrice (12) sont agencées vu dans le sens axial sans déport les unes au-dessus des autres sur celle-ci, dans lequel chaque colonne (14) orientée verticalement de sources de lumière (6) de la piste conductrice (12) respective peut être commandée par le biais de l'unité de commande (16) indépendamment des autres colonnes (14) de sorte que par les colonnes (14) orientées verticalement un motif lumineux puisse être projeté sur la zone de paroi de récipient (8) d'un récipient (2) individuel qui est réglé de manière variable selon les propriétés de surface et pour lequel des colonnes (14) contiguës de sources de lumière (6) sont interconnectées en blocs de lumière, dans lequel les blocs de lumière du motif lumineux présentent une distance axiale les uns des autres plus grande par rapport à un motif lumineux avec toutes les colonnes (14) commandées, dans lequel les colonnes (14) orientées verticalement de sources de lumière (6) de chaque piste conductrice (12) sont commandées de sorte qu'un modèle de bande (15) vu dans le sens axial, présentant un déport soit projeté depuis les blocs de lumière sur la zone de paroi de récipient (8) en ce que des sources de lumière individuelles ou un groupe de sources de lumière (6) contiguës d'une colonne (14) orientée verticalement peuvent être activées ou désactivées simultanément avec des sources de lumière (6) individuelles ou un groupe de sources de lumière (6) contiguës horizontalement au moins d'une colonne (14) contiguë, dans lequel l'unité de commande (16) est en outre formée de telle manière qu'au moyen du modèle de bande (15) ainsi que l'au moins une caméra (5) tout d'abord indépendamment de la teneur et de la couleur de récipient une position exacte de manière absolue du joint de récipient et/ou du bossage (19) soit déterminée et ensuite une orientation de la bouteille (2) ou du récipient (2) soit permise de sorte qu'une étiquette puisse être appliquée aux endroits, auxquels ne se trouve aucun joint de récipient et aucun bossage (19), ainsi qu'un étiquetage des bouteilles orientées (2) et récipients similaires (2) soit permis dans une machine d'étiquetage de sorte que l'étiquette soit agencée dans une position prédéterminée et répétitive toujours orientée de manière identique par rapport aux joints de récipient et/ou bossages (19).

2. Système de détection selon la revendication 1, **caractérisé en ce que** dans la direction verticale au moins une ou un groupe de sources de lumière (6) d'une colonne peut être activé(e) et au moins une ou un groupe de sources de lumière (6) peut être désactivé(e).

3. Système de détection selon la revendication 1 ou 2, **caractérisé en ce qu'**au moins des sources de lumières individuelles ou des groupes de sources de lumière (6) contiguës d'une colonne (14) orientée verticalement peuvent être activées ou désactivées simultanément avec des sources de lumière individuelles ou un groupe de sources de lumière (6) contiguës horizontalement au moins d'une colonne (14) contiguë avec au moins dans un dans des sources de lumière individuelles contiguës verticalement ou groupe de sources de lumière contiguës de telle manière qu'un motif en damier de zones claires et foncées puisse être généré sur l'unité d'éclairage (3) et ensuite sur un récipient.

4. Système de détection selon l'une des revendications précédentes, **caractérisé en ce que** l'unité d'éclairage (3) présente un élément porteur (9) avec une surface de lumière (10) orientée par rapport au récipient (2).

5. Système de détection selon l'une des revendications précédentes, **caractérisé en ce que** l'unité d'éclairage (3) est réalisée de sorte qu'un modèle de bande (15) orienté verticalement puisse être projeté sur la zone de paroi de récipient (8).

6. Système de détection selon l'une des revendications précédentes, **caractérisé en ce que** l'unité d'éclairage (3) présente au niveau de sa surface de lumière (10) les plusieurs pistes conductrices (12).

7. Système de détection selon l'une des revendications précédentes, **caractérisé en ce que** l'unité d'éclairage (3) est réalisée au moins au niveau de sa surface de lumière (10) comme un secteur circulaire.

8. Système de détection selon l'une des revendications précédentes, **caractérisé en ce que** l'agencement optique (4) présente plusieurs caméras (5).

9. Système de détection selon l'une des revendications précédentes, **caractérisé en ce qu'**une lentille optique (17) est associée à l'au moins une caméra (5).

10. Système de détection selon l'une des revendications précédentes, **caractérisé en ce que** l'au moins une caméra (5) de l'agencement optique (4) est agencée entre deux unités d'éclairage (3) agencées verticalement l'une au-dessus de l'autre.

11. Système de détection selon l'une des revendications précédentes, **caractérisé en ce que** l'unité d'éclairage (3) peut être réglable en hauteur ensemble et/ou simultanément avec l'au moins une caméra (5) de l'agencement optique (4).

12. Procédé de traitement de bouteilles (2) et récipients similaires (2) avec un procédé d'inspection au moyen d'un système de détection pour la détection de bouteilles (2) et récipients similaires (2) dans le procédé en lumière incidente pour un étiquetage précis en position des bouteilles (2) et récipients similaires (2), dans lequel les bouteilles (2) ou récipients similaires (2) présentent des joints de récipient et/ou bossages (19) agencés au niveau d'une paroi de récipient, dans lequel le système de détection (1) présente une unité de commande (16), au moins une unité d'éclairage (3) et au moins un agencement optique (4) avec au moins une caméra (5), dans lequel l'unité d'éclairage (3) présente une pluralité de sources de lumière (6) agencées sur plusieurs pistes conductrices (12) qui sont agencées vu dans un sens vertical de l'unité d'éclairage les unes au-dessus des autres de sorte qu'au moyen des sources de lumière (6) agencées dans des colonnes orientées verticalement respectivement un faisceau de lumière (7) en forme de bande puisse être projeté comme lumière incidente sur une zone de paroi de récipient (8), dans lequel les faisceaux de lumière projetés respectivement sur la zone de paroi de récipient (8) sont espacés vu dans un sens axial de l'unité d'éclairage (3) les uns des autres, dans lequel chaque colonne (14) orientée verticalement de sources de lumière (6) de la piste conductrice (12) respective peut être commandée par le biais d'une unité de commande indépendamment des autres colonnes (14) de sorte qu'un motif lumineux puisse être projeté sur la zone de paroi de récipient (8) d'un récipient (2) individuel par les colonnes (14) orientées verticalement, dans lequel le procédé d'inspection comporte au moins les étapes :
- la détection de propriétés de surface des récipients (2), et
- la génération variable d'un motif lumineux sur la zone de paroi de récipient par commande de chaque colonne (14) orientée verticalement de sources de lumière (6) indépendamment des autres colonnes (14) par le biais de l'unité de commande (16) selon les propriétés de surface détectées de telle manière que par les colonnes (14) un motif lumineux soit projeté sur la zone de paroi de récipient (8) d'un récipient individuel (2) qui est réglé de manière variable selon les propriétés de surface et pour lequel des colonnes (14) contiguës de sources de lumière (6) sont interconnectées en blocs de lumière, dans lequel les blocs de lumière du motif lumineux présentent une distance axiale les uns des autres plus grande par rapport à un motif lumineux avec toutes les colonnes (14) commandées, dans lequel les colonnes (14) orientées verticalement de sources de lumière (6) de chaque piste conductrice (12) sont commandées de sorte qu'un modèle de bande (15) vu dans le sens axial présentant un déport soit projeté à partir des blocs de lumière sur la zone de paroi de récipient (8), dans lequel le procédé d'inspection est réalisé pour la reconnaissance de la position de joints de récipient et/ou bossages (19) sur la surface des bouteilles (2) et récipients similaires (2), ainsi que
- la détermination d'une position exacte de manière absolue du joint de récipient et/ou du bossage (19) indépendamment de la teneur et de la couleur de récipient au moyen du modèle de bande (15) ainsi qu'au moyen de l'au moins une caméra (5), et
de plus le procédé de traitement de bouteilles (2) et récipients similaires (2) comporte ensuite au moins les étapes :
- l'orientation de la bouteille (2) ou du récipient (2) de sorte qu'une étiquette puisse être appliquée aux endroits, auxquels ne se trouve aucun joint de récipient et aucun embossage (19) afin d'éviter un soulèvement d'étiquette, ainsi que
- l'étiquetage des bouteilles (2) orientées et récipients similaires (2) dans une machine d'étiquetage de sorte que l'étiquette soit agencée dans une position prédéterminée et répétitive toujours orientée de manière identique par rapport aux joints de récipient et/ou bossages (19).
